(19) Europäisches Patentamt
European Patent Office
Office européen des brevets

(11) **EP 1 715 471 A2**

(12) **EUROPEAN PATENT APPLICATION**

(43) Date of publication:
**25.10.2006 Bulletin 2006/43**

(51) Int Cl.:
**G09G 3/28** *(2006.01)*

(21) Application number: **06252095.2**

(22) Date of filing: **18.04.2006**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(30) Priority: **19.04.2005 KR 20050032291**

(71) Applicant: **Samsung SDI Co., Ltd.**
**Suwon-si,**
**Gyeonggi-do (KR)**

(72) Inventor: **Kim, Duck-Hyun,**
**Samsung SDI Co., Ltd.**
**Suwon-si**
**Gyeonggi-do (KR)**

(74) Representative: **Mounteney, Simon James**
**Marks & Clerk**
**90 Long Acre**
**London WC2E 9RA (GB)**

(54) **Method of driving plasma display panel (PDP)**

(57)   A method of driving a Plasma Display Panel (PDP) having discharge cells formed where sustain electrodes cross address electrodes, the method including: processing an input image signal received from an external device and dividing the processed input image signal into frames, each frame including a plurality of subfields, each subfield having a corresponding gray scale weight; and supplying a voltage with a pulse waveform, the pulse waveform having the form of a slope during a predetermined period in the subfield. The method further includes: determining a type of the input image signal; and if the image signal is a Phase Alternation Line (PAL) signal, adjusting the gradient of the slope according to a temperature of the PDP.

## FIG. 9

## Description

## BACKGROUND OF THE INVENTION

## Field of the Invention

The present invention relates to a method of driving a Plasma Display Panel (PDP), and more particularly, to a method of driving a PDP in which a frame constituting a display period is divided into a plurality of subfields for a time division gray scale display, wherein each subfield includes a reset period, an address period, and a sustain-discharge period.

## Description of the Related Art

Plasma display panels (PDPs) have come to public attention because they can be easily manufactured as large-sized flat panel displays. A PDP displays images using a discharge phenomenon. Generally, PDPs can be classified into DC PDPs and AC PDPs according to the driving voltage. Since DC PDPs have a long discharge delay time, the current focus is on the development of AC PDPs.

A representative AC PDP is a 3-electrode AC surface discharge PDP which includes three electrode groups and is driven by AC voltages. Since a 3-electrode surface discharge PDP, which is composed of a plurality of plates, is thinner and lighter than a conventional Cathode Ray Tube (CRT), the 3-electrode surface discharge PDP can provide a large-sized screen.

A conventional 3-electrode surface discharge PDP and a driving apparatus and method thereof are disclosed in U.S. Patent No. 6,744,218 entitled "Method of Driving a Plasma Display Panel in which the Width of Display Sustain Pulse Varies".

The PDP disclosed above includes a plurality of display cells, wherein each display cell consists of three (red, green, and blue) discharge cells and a gray scale of an image is represented by adjusting discharge states of the discharge cells.

In order to represent the gray scale of the PDP, an image signal received from an external device is processed and divided into frames and each frame is divided into 8 subfields having different light-emitting frequencies, thereby representing 256 gray scales. The image signal received from the external device can have various formats. Generally, the image signal can be a National Television System Committee (NTSC) signal having a vertical frequency of 60Hz, or a Phase Alternation Line (PAL) signal having a vertical frequency of 50Hz.

In order to display an image using 256 gray scales, when an NTSC signal is received, a frame period (16.67ms) corresponding to 1/60 second is divided into 8 subfields. When a PAL signal is received, a frame period (20ms) corresponding to 1/50 second is divided into 8 subfields.

Each subfield is divided into a reset period for performing uniform discharge, an address period for selecting display cells, and a sustain-discharge period for representing a gray scale according to the number of discharges. The total length of the reset period and the address period is uniform in all subfields and the length of the sustain-discharge period is different for each subfield. The subfields can be set so that the numbers of discharge pulses generated in the sustain discharge periods of the subfields sequentially increase in an order of 1, 2, 4, 8, 16, 32, and 128. The number of discharges of each discharge cell is decided according to the number of discharge pulses. As such, by adjusting the number of discharges in the sustain discharge periods in the subfields, 256 gray scales can be represented.

However, in the conventional display panel driving method, in order to solve problems such as wide-area flicker, different subfield driving methods are used for the NTSC method and the PAL method. Also, the discharge characteristic of the panel becomes different according to the subfield driving methods. Particularly, in the PAL driving method, when a reset discharge is performed by a reset pulse supplied during a reset period, a discharge error or a low discharge occurs according to a change in temperature, which causes an unstable discharge.

## SUMMARY OF THE INVENTION

The present invention provides a Plasma Display Panel (PDP) driving method which is capable of stabilizing a discharge for example by adjusting slopes of ramp pulse voltages supplied to electrodes according to a change in temperature.

According to an aspect of the present invention, there is provided a method of driving a Plasma Display Panel (PDP), the PDP having discharge cells formed where sustain electrodes intersect address electrodes, the method including: processing an image signal received from the outside and dividing the processed image signal into frames, wherein each frame includes a plurality of subfields, each subfield having a corresponding gray scale weight; and supplying a voltage with a pulse waveform, the pulse waveform having the form of a slope during a predetermined period in the subfield. The method may further include: determining a type of the input image signal; and if the image signal is a Phase Alternation Line (PAL) signal, adjusting the gradient of the slope according to a temperature of the PDP.

Adjusting the gradient of the slope of the pulse waveform may include: detecting the temperature of the PDP and adjusting the gradient of the slope of the pulse waveform according to the detected temperature of the PDP.

The gradient of the slope of the pulse waveform may be adjusted to be inversely proportional to the temperature of the PDP.

According to another aspect of the present invention, there is provided a method of driving a PDP, the PDP having discharge cells formed where sustain electrodes intersect address electrodes, the method including: processing an image signal received from the outside and dividing the processed image signal into frames, wherein each frame includes a plurality of subfields, each subfield having a corresponding gray scale weight; and supplying a voltage with a pulse waveform, the pulse waveform having the form of a slope during a predetermined period in the subfield, wherein the frame is one of a first frame having a subfield configuration in which gray scale weights sequentially increase with a constant slope, and a second frame having two or more subfield groups, each subfield group in which gray scale weights sequentially increase with a constant slope. The method may further include: determining a type of the frame; and if the frame is the second frame, adjusting the gradient of the slope according to a temperature of the PDP.

Adjusting the gradient of the slope of the pulse waveform may include: detecting the temperature of the PDP and adjusting the gradient of the slope of the pulse waveform according to the detected temperature of the PDP.

The gradient of the slope of the pulse waveform may be adjusted to be inversely proportional to the temperature of the PDP.

According to another embodiment of the present invention, there is provided a method of driving a PDP, the PDP having discharge cells formed where sustain electrodes intersect address electrodes, the method including: processing an image signal received from the outside and dividing the processed image signal into frames, wherein each frame includes a plurality of subfields, each subfield having a corresponding gray scale weight; and supplying a voltage with a pulse waveform, the pulse waveform having the form of a slope during a predetermined period in the subfield. The method may further include: determining a type of the image signal; creating a configuration of subfields in the frame according to the type of image signal; detecting a temperature of the PDP; and adjusting the gradient of the slope of the pulse waveform according to the temperature of the PDP.

According to the present invention, it is possible to stabilize a discharge by differently adjusting the gradient of slopes of ramp pulse voltages supplied to electrodes according to a change in temperature of the PDP. The present invention may also provide a plasma display panel driving apparatus adapted to carry out any method as aforesaid. For example, the present invention may provide a plasma display panel driving apparatus for driving a Plasma Display Panel (PDP) having discharge cells arranged where sustain electrodes cross address electrodes, the plasma display panel driving apparatus comprising: means for processing an input image signal received from an external device and dividing the processed input image signal into frames, wherein each frame includes a plurality of subfields, each subfield having a corresponding gray scale weight; and means for supplying a voltage with a pulse waveform, the pulse waveform having the form of a slope during a predetermined period in each subfield, means for determining a type of the input image signal; and means for adjusting the gradient of the slope according to a temperature of the PDP if the input image signal is a Phase Alternation Line (PAL) signal.

## BRIEF DESCRIPTION OF THE DRAWINGS

A more complete appreciation of the present invention and many of the attendant advantages thereof, will be readily apparent as the present invention becomes better understood by reference to the following detailed description when considered in conjunction with the accompanying drawings in which like reference symbols indicate the same or similar components, wherein:

FIG. 1 is a perspective view of a 3-electrode surface discharge PDP to which a PDP driving method according to an embodiment of the present invention is supplied;

FIG. 2 is a block diagram of a PDP driving apparatus to which the PDP driving method is supplied, according to an embodiment of the present invention;

FIG. 3A is a timing diagram of a PDP driving method in which a unit frame of an NTSC image signal is divided into a plurality of subfields, according to an embodiment of the present invention;

FIG. 3B is a timing diagram of a PDP driving method in which a unit frame of a PAL image signal is divided into a plurality of subfields, according to an embodiment of the present invention;

FIG. 4 is a view schematically showing a subfield used in a PDP driving method in which a unit frame of an NTSC image signal is divided into a plurality of subfields, according to an embodiment of the present invention;

FIG. 5 is a view schematically showing a subfield used in a PDP driving method in which a unit frame of a PAL image signal is divided into a plurality of subfields, according to another embodiment of the present invention;

FIG. 6 is a timing diagram of driving signals supplied to electrodes of a PDP in a unit subfield in the PDP driving method referred to in FIGS. 3, 4, and 5, according to an embodiment of the present invention;

FIG. 7 is a timing diagram of driving signals supplied to electrodes of a PDP in a unit subfield in the PDP driving method referred to in FIGS. 3, 4, and 5, according to another embodiment of the present invention;

FIG. 8 is a view of a ramp pulse waveform whose slope changes according to temperature, in a PAL image signal, according to an embodiment of the present invention;

FIG. 9 is a flowchart of a PDP driving method according to an embodiment of the present invention;

FIG. 10 is a flowchart of a PDP driving method according to another embodiment of the present invention;

FIG. 11 is a detailed circuit diagram of an X driver and a Y driver including a ramp creating circuit of the PDP driving apparatus of FIG. 2, according to an embodiment of the present invention; and

FIG. 12 is a circuit diagram of the ramp creating circuit in the PDP driving apparatus of FIG. 2, according to an embodiment of the present invention.

## DETAILED DESCRIPTION OF THE INVENTION

The present invention is described more fully below with reference to the accompanying drawings, in which exemplary embodiments of the present invention are shown.

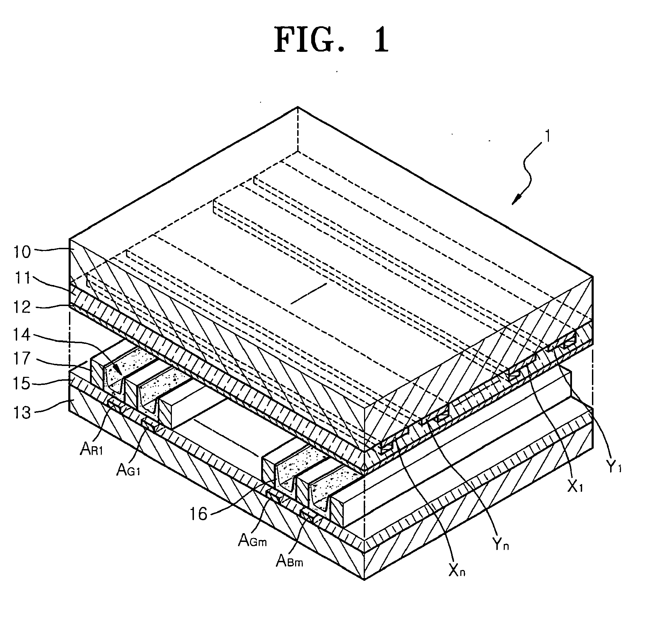

FIG. 1 is a perspective view of a 3-electrode surface discharge PDP 1 to which a PDP driving method according to an embodiment of the present invention is supplied.

Referring to FIG. 1, address electrodes $A_{R1}$, ..., $A_{Bm}$, upper and lower dielectric layers 11 and 15, Y electrodes $Y_1$, ..., $Y_n$, X electrodes $X_1$, ..., $X_n$, phosphor layers 16, barrier ribs 17, and a MgO layer 12 which is a protection layer, are formed between front and rear glass substrates 10 and 13 of the surface discharge PDP 1.

The address electrodes $A_{R1}$, ..., $A_{Bm}$ are formed in a predetermined pattern on an upper surface of the rear glass substrate 13. The lower dielectric layer 15 buries the address electrodes $A_{R1}$, ..., $A_{Bm}$. The barrier ribs 17 are formed parallel to the address electrodes $A_{R1}$, ..., $A_{Bm}$ on a surface of the lower dielectric layer 15. The barrier ribs 17 partition discharge areas and prevent cross-talk between the discharge areas. The phosphor layers 16 are formed between the barrier ribs 17 on the lower dielectric layer 15 formed on the rear glass substrate 13.

The phosphor layers 16 are formed on sidewalls of the barrier ribs 17 and on the lower dielectric layer 15 formed on the rear glass substrate 13.

The X electrodes $X_1$, ..., $X_n$ and the Y electrodes $Y_1$, ..., $Y_n$ are formed in a predetermined pattern on a lower surface of the front glass substrate 10 such that they cross the address electrodes $A_{R1}$, ..., $A_{Bm}$. Discharge cells 14 are defined where the X electrodes $X_1$, ..., $X_n$ and the Y electrodes $Y_1$, ..., $Y_n$ intersect the address electrodes $A_{R1}$, ..., $A_{Bm}$. Each of the X electrodes $X_1$, ..., $X_n$ and each of the Y electrodes $Y_1$, ..., $Y_n$ are formed by coupling a transparent conductive electrode formed of a material such as Indium Tin Oxide (ITO) with a metal electrode for increasing conductivity.

The X electrodes $X_1$, ..., $X_n$ are common electrodes of the respective discharge cells 14, and the Y electrodes $Y_1$, ..., $Y_n$ are scan electrodes of the respective discharge cells 14.

The PDP driving method according to the current embodiment of the present invention can be supplied to the 3-electrode PDP of FIG. 1 and can also be supplied to a 2-electrode PDP in which one electrode group is used as the address electrodes and the other electrode group is used as both the scan electrodes and the sustain electrodes.

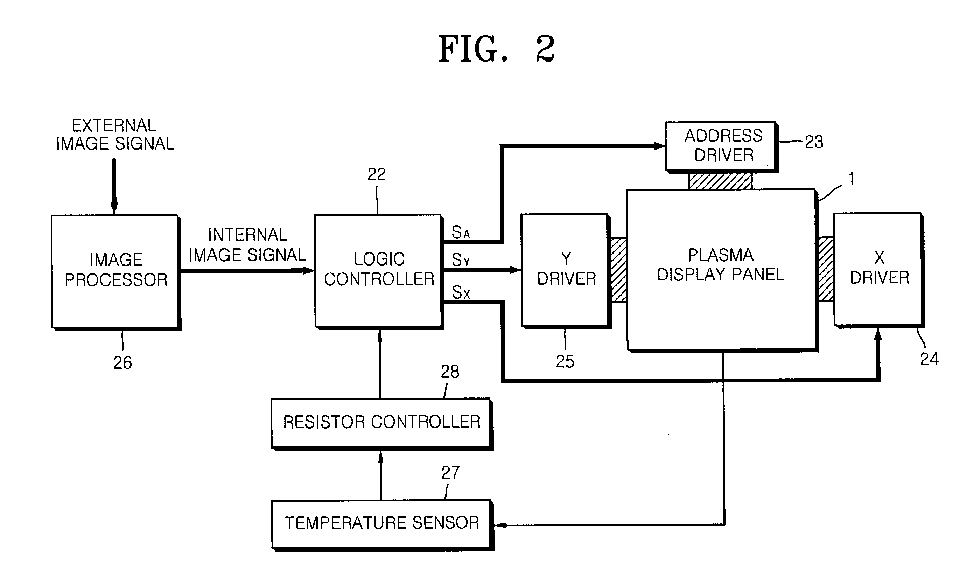

FIG. 2 is a block diagram of a PDP driving apparatus 2 to which the PDP driving method is supplied according to an embodiment of the present invention.

Referring to FIG. 2, the PDP driving apparatus 2 includes an image processor 26, a logic controller 22, an address driver 23, an X driver 24, a Y driver 25, a temperature sensor 27, and a resistor controller 28. The image processor 26 converts external analog image signals into digital signals and generates internal image signals, for example, red (R), green (G), and blue (B) image data signals, a clock signal, and vertical and horizontal synchronization signals. The logic controller 22 generates driving control signals $S_A$, $S_Y$, and $S_X$ according to the internal image signals received from the image processor 26. The address driver 23, the X driver 24, and the Y driver 25 receive the driving control signals $S_A$, $S_Y$, and $S_X$, generate the corresponding driving control signals $S_A$, $S_Y$, and $S_X$, and supply the generated driving control signals $S_A$, $S_Y$, and $S_X$ to the corresponding electrodes.

That is, the address driver 23 processes the address driving control signal $S_A$ received from the logic controller 22, generates a display data signal, and supplies the generated display data signal to the address electrodes. The X driver 24 processes the X driving control signal $S_X$ received from the logic controller 22, and supplies a voltage corresponding to the X driving control signal $S_X$ to the X electrodes. The Y driver 25 processes the Y driving control signal $S_Y$ received from the logic controller 22, and outputs a voltage corresponding to the Y driving control signal $S_Y$ to the Y electrodes.

The external analog image signals input to the image processor 26 can be NTSC image signals or PAL image signals. The NTSC image signals have a vertical frequency of 60 Hz and the PAL image signals have a vertical frequency of 50 Hz.

Accordingly, the type of external analog input image signal is determined by the vertical frequency of the external analog input image signal. The logic controller 22 can select a subfield configuration which can optimize discharge characteristics with respect to the respective external analog input image signals according to the type of external analog input image signal. Also, a slope of a ramp pulse waveform supplied to the Y electrodes in a reset period can be controlled so as to perform an optimal discharge according to the subfield configuration.

The temperature sensor 27 detects the panel temperature of the PDP 1. If the panel temperature increases, the temperature controller 28 reduces the slope of the ramp pulse waveform during the reset period. If the panel temperature decreases, the temperature controller 28 increases the slope of the ramp pulse waveform during the reset period.

Since the temperature sensor 27 detects the panel temperature of the PDP to recognize whether the panel temperature can influence a reset discharge, the temperature sensor 27 should be disposed near the PDP. The temperature sensor 27 can be disposed to directly contact a rear surface of the panel. The temperature sensor 27 can be a conventional temperature measuring device such as a thermocouple. Alternatively, the temperature sensor 27 can be a bimetal temperature sensor which generates a signal when a sensed temperature is higher than a reference temperature.

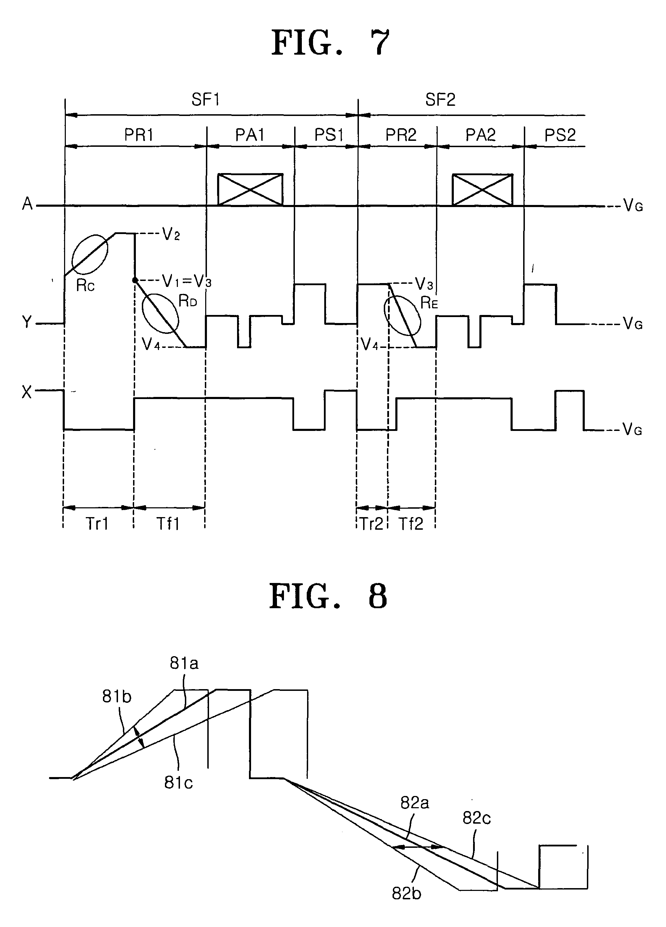

At this time, if the temperature of the panel increases, secondary electron emission of the MgO layer increases, thus causing an over discharge. Due to the over-discharge, more wall charges can be formed than is generally the case. As illustrated in FIG. 8, by decreasing the slope of the ramp pulse waveform during the reset period, it is possible to suppress such an over-discharge at a high temperature.

Also, if the temperature of the panel decreases, secondary electron emission of the MgO layer decreases so that a discharge error can be generated due to a low discharge. Due to the discharge error, less wall charges can be formed than is generally the case. As illustrated in FIG. 8, by increasing the slope of the ramp pulse waveform during the reset period, it is possible to suppress such a discharge error at a low temperature.

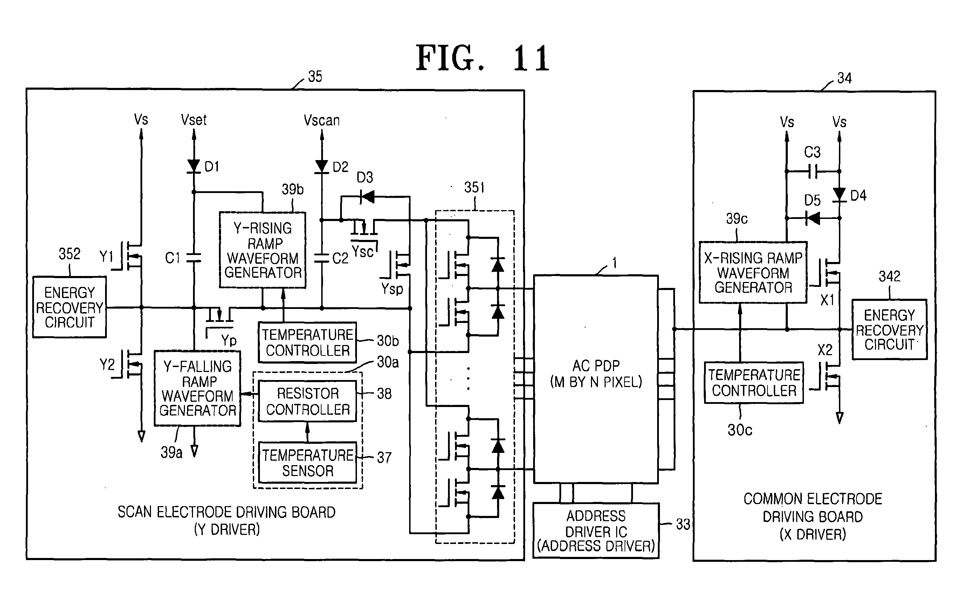

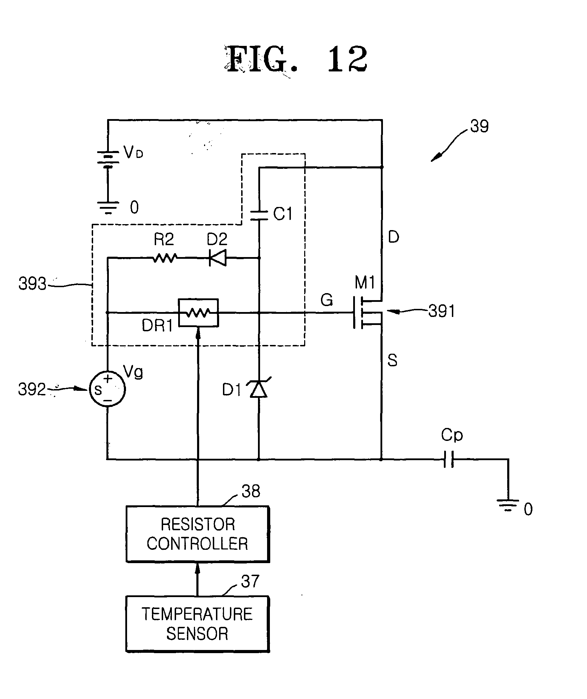

The slope of the ramp pulse waveform during the reset period is created by a ramp creating circuit of FIGS. 11 and 12. If an external analog input image signal is a PAL image signal, the slope of the external analog input image signal can be controlled by adjusting device parameters (e.g., resistance or capacitance) according to a change in temperature.

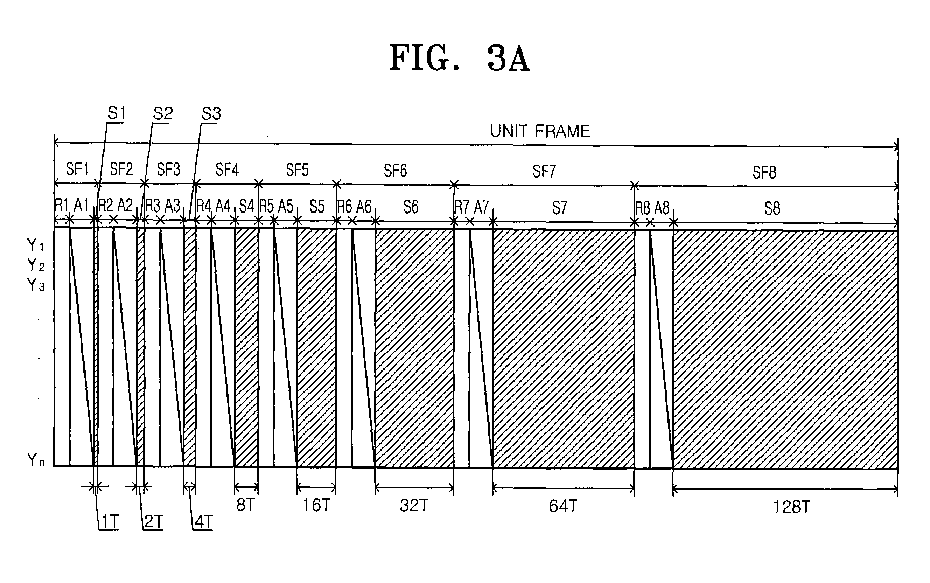

FIG. 3A is a timing diagram of a PDP driving method in which a unit frame of an NTSC image signal is divided into a plurality of subfields, according to an embodiment of the present invention.

Referring to FIG. 3A, a unit frame is divided into 8 subfields SF1, ..., SF8 for a time division gray scale display. Also, the respective subfields SF1, ..., SF8 are respectively divided into reset periods R1, ..., R8, address periods A1, ..., A8, and sustain discharge periods S1, ..., S8.

The brightness of the PDP is proportional to the length of the sustain discharge periods S1, ..., S8 in a unit frame. The length of the sustain discharge periods S1, ..., S8 in a unit frame is 255T (T is a unit time). The sustain discharge period Sn of an n-th subfield SFn is set to a time corresponding to $2^n$. Accordingly, by appropriately selecting subfields to be displayed among 8 subfields, 256 gray scales including a zero gray scale which is not displayed in any subfield can be displayed.

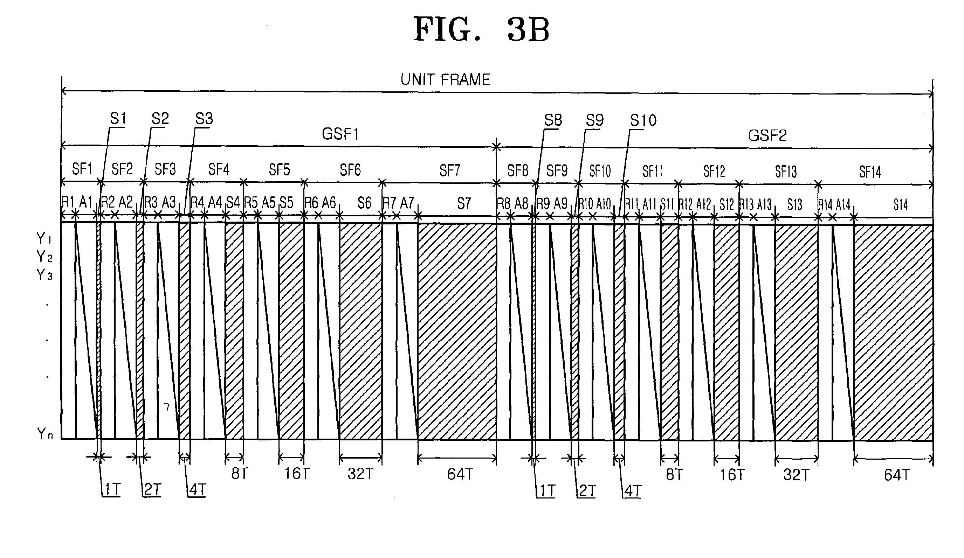

FIG. 3B is a timing diagram of a PDP driving method in which a unit frame of a PAL image signal is divided into a plurality of subfields, according to an embodiment of the present invention.

Referring to FIG. 3B, in order to prevent wide-area flicker from being generated in a PAL image signal, the PDP is driven by the PAL image signal having a unit frame that is formed by two or more subfield groups GSF1 and GSF2 whose gray scale weights sequentially increase with a constant slope.

That is, in the current embodiment of the present invention, a unit frame includes two subfield groups GSF1 and GSF2 having gray scale weights that sequentially increase with a constant slope for a time division gray scale display. In the present embodiment, in which 256 gray scales are represented, the first subfield group GSF1 is divided into 7 subfields SF1, ..., SF7. The respective subfields SF1, ..., SF7 are divided into reset periods R1, ..., R7, address periods A1, ..., A7, and sustain discharge periods S1, ..., S7.

The second subfield group GSF2 is divided into 7 subfields SF8, ..., SF14. The respective subfields SF8, ..., SF14 are divided into reset periods R8, ..., R14, address periods A8, ..., A14, and sustain discharge periods S8, ..., S14.

The brightness of the PDP is proportional to the length of the sustain discharge periods S1, ..., S14 in the unit frame. The length of the sustain discharge periods S1, ..., S14 in the unit frame can be 255T (T is a unit time). Accordingly, by appropriately selecting subfields to be displayed among 8 subfields, 256 gray scales including a zero gray scale which is not displayed in any subfield can be displayed.

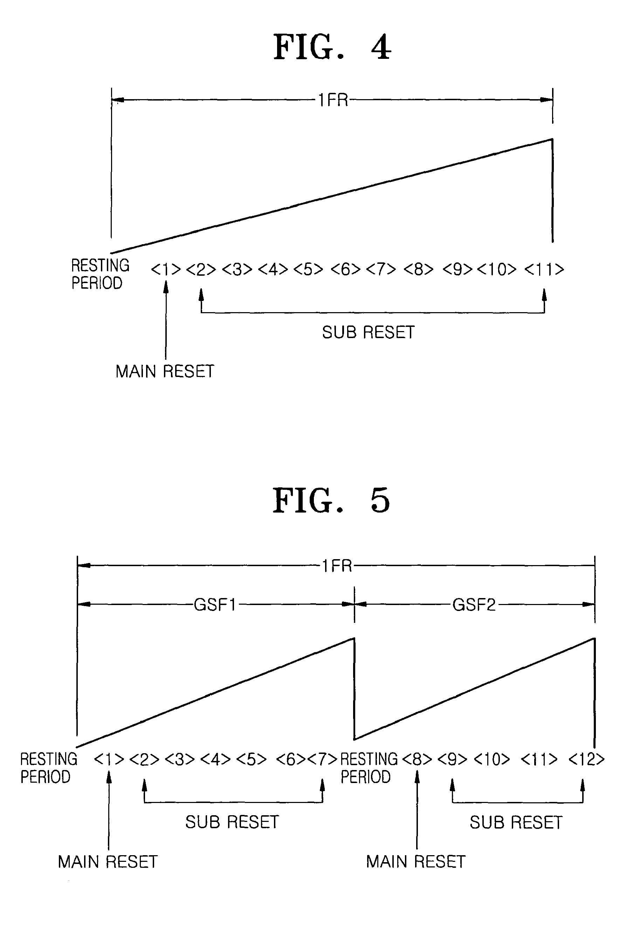

FIGS. 4 and 5 are views schematically showing subfields used in PDP driving methods for dividing and driving unit frames with respect to an NTSC image signal and a PAL image signal into a plurality of subfields, respectively, according to embodiments of the present invention.

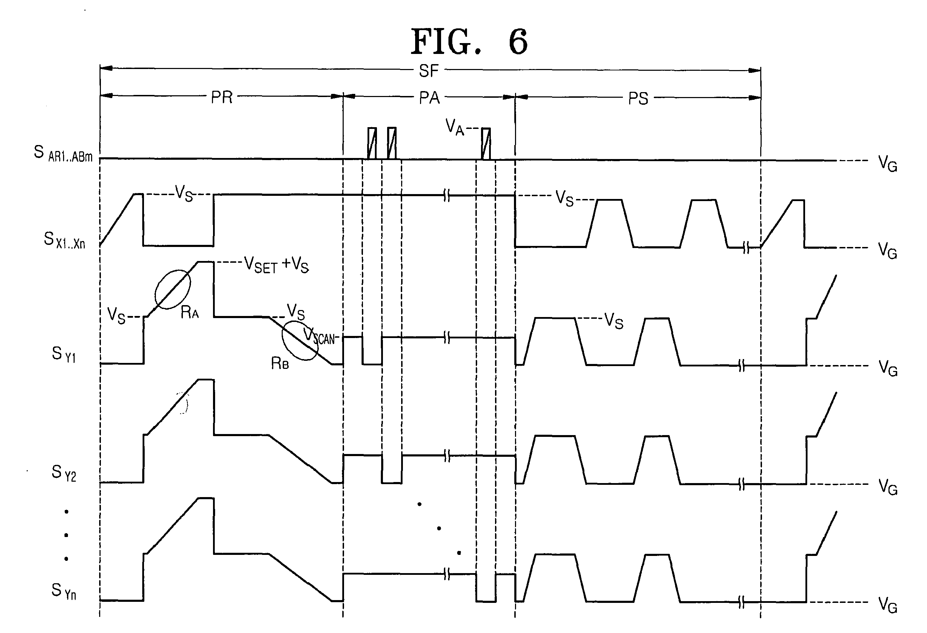

Referring to FIGS. 4 and 5, the configuration of subfields constructing each frame can vary according to the type of input image signal. Each subfield can include a reset period, an address period, and a sustain-discharge period. Also, reset periods can be set differently for different subfields. As illustrated in FIG. 6, the same main reset period can be repeated. As illustrated in FIG. 7, a main reset period and a sub reset period can be selectively supplied.

In the embodiments illustrated in FIGS. 4 and 5, a main reset period and a sub reset period are selectively used. As illustrated in FIG. 7, a period in which a ramp pulse waveform voltage having a predetermined slope is supplied exists in each reset period. Also, frames can have different subfield configurations according to gray scale weights as necessary. Examples of frames having different subfield configurations are illustrated in FIGS. 4 and 5, according to embodiments of the present invention.

In the current embodiments of the present invention, the configuration of subfields in a frame is different according to the type of input image signal. In some embodiments, when the characteristic of an image to be displayed or a different discharge characteristic is required, frames having various different subfield configurations can be selectively supplied. An embodiment to which a frame having a subfield configuration different according to the type of input image signal is supplied is described below.

The image signal input to the PDP from an external device can be a Phase Alternate Line (PAL) image signal generally having a vertical frequency of 50Hz or a National Television Systems Committee (NTSC) image signal having a vertical frequency of 60Hz. Accordingly, the PDP can be driven by either of an input image signal having a vertical frequency of 50Hz and an input image signal having a vertical frequency of 60Hz.

In a PDP driving method according to an embodiment of the present invention, logic processing is performed according to the vertical frequency of an input image signal. If an input image signal of 50Hz is received, logic processing is performed in a 50Hz mode, and if an input image signal of 60Hz is received, logic processing is performed in a 60Hz mode. Then, an image corresponding to the received input image signal is displayed on the PDP. If the vertical frequency is represented in units of Hz, the number of frames corresponding to the vertical frequency per second exists and a time assigned to each frame becomes a time corresponding to the inverse number of the vertical frequency. Accordingly, the time assigned to each frame becomes 16.67ms when the vertical frequency is 60Hz, and becomes 20ms when the vertical frequency is 50Hz.

In the current embodiment, if the input image signal is an NTSC signal, the PDP is driven in units of a frame having a subfield configuration as illustrated in FIG. 4. If the input image signal is a PAL signal, the PDP is driven in units of a frame having a subfield configuration as illustrated in FIG. 5.

That is, if the input image signal is an NTSC signal, the PDP is driven in units of a first frame having a subfield configuration in which gray scale weights sequentially increase with a constant slope. If the input image signal is a PAL signal, the PDP is driven in units of a second frame formed by two or more subfield groups in each of which gray scale weights sequentially increase with a constant slope. This operation is performed to prevent wide-area flicker from being generated with respect to PAL image signals.

A frame 1 FR illustrated in FIG. 4 is formed by 11 subfields, including a resting period, in which gray scale weights sequentially increase with a constant slope according to the arrangement order of the subfields. Also, a frame 1FR illustrated in FIG. 5 is formed by two subfield groups GSF1 and GSF2 in each of which gray scale weights sequentially increase with a constant slope according to the arrangement order of the subfields. The first subfield group GSF1 has a configuration in which gray scale weights of 7 subfields including a resting period sequentially increase with a constant slope. The second subfield group GSF2 has a configuration in which gray scale weights of 5 subfields including a resting period sequentially increase with a constant slope. Accordingly, the frame 1FR becomes a two-mount type frame formed by two resting periods and 12 subfields.

FIG. 6 is a timing diagram of driving signals supplied to electrodes of a PDP in a unit subfield using the PDP driving method referred to in FIGS. 3, 4, and 5, according to an embodiment of the present invention.

In a PDP driving method according to an embodiment of the present invention, an input image signal received from an external device is processed and divided into frames, each frame including a plurality of subfields, wherein each subfield has a gray scale weight, and each subfield includes a reset period, an address period, and a sustain-discharge period.

In FIG. 6, a reference symbol $S_{AR1,...,ABm}$ represents driving signals supplied to address electrodes ($A_{R1}$ through $A_{Bm}$ of FIG. 1), a reference symbol $S_{X1,...,Xn}$ represents driving signals supplied to X electrodes ($X_1$ through $X_n$ of FIG. 1), and a reference symbol $S_{Y1,...,Yn}$ represents driving signals supplied to Y electrodes ($Y_1$ through $Y_n$ of FIG. 1).

Referring to FIG. 6, in a reset period PR of a unit subfield SF, a voltage supplied to the X electrodes $X_1$ through $X_n$ gradually increases from a ground voltage $V_G$ to a second voltage $V_S$, for example, to 155 V. The ground voltage $V_G$ is supplied to the Y electrodes $Y_1$ through $Y_n$ and the address electrodes $A_{R1}$ through $A_{Bm}$. Accordingly, a weak discharge occurs between the X electrodes $X_1$ through $X_n$ and the Y electrodes $Y_1$ through $Y_n$ and between the X electrodes $X_1$ through $X_n$ and the address electrodes $A_1$ through $A_m$, so that negative wall charges are formed near the X electrodes $X_1$ through $X_n$.

Next, the voltage supplied to the Y electrodes $Y_1$ through $Y_n$ gradually rises to a maximum voltage $V_{SET}+V_S$, for example, 355V, higher by a third voltage $V_{SET}$ than the second voltage $V_S$, for example, 155V. The ground voltage $V_G$ is supplied to the X electrodes $X_1$ through $X_n$ and the address electrodes $A_{R1}$ through $A_{Bm}$. Accordingly, a weak discharge occurs between the Y electrodes $Y_1$ through $Y_n$ and the X electrodes $X_1$ through $X_n$, and a weaker discharge occurs between the Y electrodes $Y_1$ through $Y_n$ and the address electrodes $A_{R1}$ through $A_{Bm}$.

Then, while the voltage supplied to the X electrodes $X_1$ through $X_n$ is maintained at the second voltage $V_S$, the voltage supplied to the Y electrodes $Y_1$ through $Y_n$ gradually falls from the second voltage $V_S$ to the ground voltage $V_G$. The ground voltage $V_G$ is supplied to the address electrodes $A_{R1}$ through $A_{Bm}$.

In the following address period PA, a display data signal of an address pulse is supplied to the address electrodes $A_{R1}$ through $A_{Bm}$ and a scan signal of a scan pulse having the ground voltage $V_G$ is sequentially supplied to the Y electrodes $Y_1$ through $Y_n$ biased to a fourth voltage $V_{SCAN}$ lower than the second voltage $V_S$, so that addressing can be stably performed.

A display data signal having a positive address voltage $V_A$ is supplied to address electrodes $A_{R1}$ through $A_{Bm}$ of selected discharge cells, and a display data signal having the ground voltage $V_G$ is supplied to address electrodes $A_{R1}$ through $A_{Bm}$ of non-selected discharge cells.

Accordingly, if the display data signal of the positive address voltage $V_A$ is supplied while the scan pulse having the ground voltage $V_G$ is supplied, wall charges for the sustain discharge are formed by an address discharge in the corresponding discharge cells. Also, in order to correctly and more efficiently perform an address discharge, the second voltage $V_S$ is supplied to the X electrodes $X_1$ through $X_n$.

In the following sustain discharge period PS, a display sustain pulse of the second voltage $V_S$ is alternately supplied to all of the Y electrodes $Y_1$ through $Y_n$ and the X electrodes $X_1$ through $X^n$, so that a discharge for sustaining display occurs in discharge cells in which the address discharge has occurred in the corresponding address period PA.

According to an embodiment of the present invention, in the case of a PAL image signal or a frame consisting of two subfield groups as illustrated in FIG. 5, in all periods in which a voltage of a rising ramp pulse waveform $R_A$ is supplied, in which a voltage of a falling ramp pulse waveform $R_B$ is supplied, and in which both a voltage of a rising ramp pulse waveform $R_A$ and a voltage of a falling ramp pulse waveform $R_B$ are supplied, a slope can be controlled according to a change in temperature as illustrated in FIG. 8.

FIG. 7 is a timing diagram of driving signals supplied to electrodes of a PDP in a unit subfield using the PDP driving method referred to FIGS. 3, 4, and 5, according to another embodiment of the present invention. FIG. 7 shows two successive subfields, each subfield including a main reset period and a sub reset period, in a frame as in the embodiments of FIGS. 4 and 5.

In a PDP driving method according to an embodiment of the present invention, an input image signal received from an external device is processed and divided into frames, each frame including a plurality of subfields, wherein each subfield has a corresponding gray scale weight, and each subfield includes a reset period, an address period, and a sustain-discharge period.

Referring to FIG. 7, in the PDP driving method according to the current embodiment of the present invention, two or more subfields exist in a frame, for example, a frame includes a first subfield SF1 and a second subfield SF2. The respective first and second subfields SF1 and SF2 include reset periods PR1 and PR2, address periods PA1 and PA2, and sustain discharge periods PS1 and PS2. A frame can be a combination of the first subfield SF1 and the second subfield SF2.

Also, the respective reset periods PR1 and PR2 include first reset periods Tr1 and Tr2 and second reset periods Tf1 and Tf2. In the current embodiment, a relatively strong reset discharge is generated during the reset period PR1 of the first subfield SF1 and a main reset having a relatively long time period is supplied to the reset period PR1. A relatively weak reset discharge is generated during the reset period PR2 of the second subfield SF2 and a sub reset having a relatively short time period is supplied to the reset period PR2.

In the first subfield SF1, during the first reset period Tr1, a voltage of a rising ramp pulse waveform gradually rising with a constant slope from a first level $V_1$ to a second level $V_2$ is supplied to Y electrodes. Also, during the second reset period Tf1, a voltage of a falling ramp pulse waveform gradually falling with a constant slope from a third level $V_3$ to a fourth level $V_4$ is supplied to the Y electrodes.

In the second subfield SF2, during the first reset period Tr2, a voltage of the third level $V_3$ is supplied to the Y electrodes. Also, in the second reset period Tf2, a voltage of a falling ramp pulse waveform gradually falling with a constant slope from the third level $V_3$ to the fourth level $V_4$ is supplied to the Y electrodes.

According to an embodiment of the present invention, in the case of a PAL image signal or a frame consisting of two subfield groups as illustrated in FIG. 5, in all of the periods in which a voltage of a rising ramp pulse waveform $R_C$ is supplied, in which voltages of falling ramp pulse waveforms $R_D$ and $R_E$ are supplied, and in which a voltage of a rising ramp pulse waveform $R_C$ and voltages of falling ramp pulse waveforms $R_D$ and $R_E$ are supplied, a slope can be controlled according to a change in temperature as illustrated in FIG. 8.

FIG. 8 is a view schematically showing a ramp pulse waveform whose slope changes according to temperature, in a PAL image signal, according to an embodiment of the present invention.

Referring to FIG. 8, in a PDP driving method according to an embodiment of the present invention, if an input image signal received from an external device is a PAL signal, it is possible to stabilize a discharge by adjusting the slopes of ramp pulses having predetermined slopes 81a and 82a in a subfield according to the temperature of the panel 1.

In a reset period, a voltage of a ramp pulse waveform as illustrated in FIG. 8 can be supplied to the Y electrodes $Y_1$ through $Y_n$. It is preferable that the slope of the ramp pulse waveform is adjusted in a manner to be inversely proportional to a change in the temperature of the panel. In particular, when the input image signal is a PAL signal, it is possible to stabilize a discharge according to a change in the temperature of the panel. If the panel temperature detected from the panel increases, it is possible to stabilize a discharge by lowering the slopes 81c and 82c. If the panel temperature detected from the panel decreases, it is possible to stabilize a discharge by increasing the slopes 81b and 82b.

The slope adjustment can be selectively supplied to the rising ramp pulse waveform 81 a and the falling ramp pulse waveform 82a. The slope of the ramp pulse waveform can change by adjusting a device parameter considering a temperature change in the ramp creating circuit illustrated in FIGS. 11 and 12.

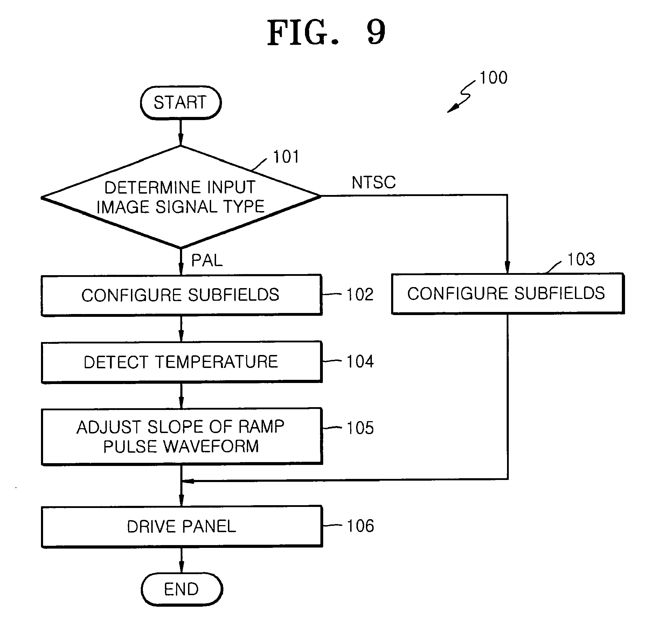

FIG. 9 is a flowchart of a PDP driving method 100 according to an embodiment of the present invention.

Referring to FIG. 9, the PDP driving method 100 includes: determining a type of an input image signal (operation 101); creating a configuration of subfields in a frame according to the type of the input image signal (operations 102 and 103); detecting a panel temperature from a PDP (operation 104); adjusting a slope of a ramp pulse waveform according to the panel temperature (operation 105); and driving the PDP by a voltage of a waveform having the slope of the ramp pulse waveform (operation 106).

The input image signal can be an NTSC signal or a PAL signal. If the image signal is an NTSC signal, the frame becomes a first frame having a subfield configuration in which gray scale weights sequentially increase with a constant slope (operation 103). If the image signal is a PAL signal, the frame becomes a second frame having two or more subfield groups in each of which gray scale weights sequentially increase with a constant slope (operation 102).

Preferably, operations 104 and 105 are performed only when the input image signal is a PAL signal. When the image signal is an NTSC signal, a voltage of a ramp pulse waveform having a predetermined slope is supplied in a subfield of the first frame generated in operation 103. Operations 104 and 105 are described in detail below with reference to FIGS. 11 and 12. Also, operation 106 is performed according to the driving method illustrated in FIGS. 6 and 7.

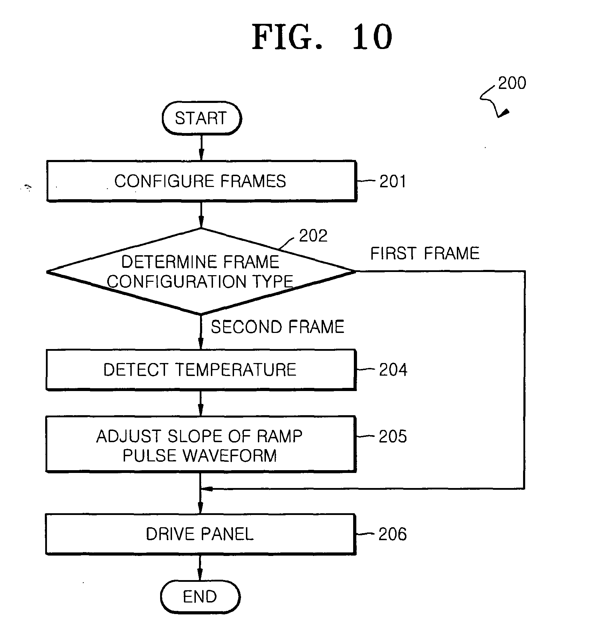

FIG. 10 is a flowchart of a PDP driving method 200 according to another embodiment of the present invention.

Referring to FIG. 10, the PDP driving method 200 includes: configuring a frame from an input image signal received from an external device (operation 201); determining the type of frame (operation 202); detecting a panel temperature of a PDP (operation 204); adjusting a slope of a ramp pulse waveform according to the panel temperature (operation 205); and driving the PDP by a voltage of a waveform having the slope of the ramp pulse waveform (operation 206).

In operation 201, the frame can be configured according to the type of input image signal. In some embodiments, when the characteristic of an image to be displayed or a different discharge characteristic is required, frames having various different subfield configurations can be selectively supplied. An embodiment to which a frame having a different subfield configuration according to the type of an input image signal is supplied, is described below.

The input image signal can be an NTSC signal or a PAL signal. Also, if the input image signal is an NTSC signal, the frame configured in operation 201 becomes a first frame having a subfield configuration in which gray scale weights sequentially increase with a constant slope. If the input image signal is a PAL signal, the frame becomes a second frame having two or more subfield groups in each of which gray scale weights sequentially increase with a constant slope.

Preferably, operations 204 and 205 are performed only when the input image signal is a PAL signal.

When the image signal is an NTSC signal, a voltage of a ramp pulse waveform having a predetermined slope is supplied in a subfield of the first frame generated in operation 201. Operations 204 and 205 are described in detail below with reference to FIGS. 11 and 12. Also, operation 206 is performed according to the driving method of FIGS. 6 and 7.

FIG. 11 is a detailed circuit diagram of an X driver and a Y driver including a ramp creating circuit 39 of the PDP driving apparatus of FIG. 2. FIG. 12 is a circuit diagram of the ramp creating circuit in the PDP driving apparatus of FIG. 2, according to an embodiment of the present invention.

Referring to FIGS. 11 and 12, a method of creating a ramp waveform and a method of adjusting the slope of the ramp waveform is described below. The ramp creating circuit of the PDP driving apparatus for supplying a ramp voltage with a ramp waveform having a predetermined slope to electrodes of the PDP 1, includes a ramp creating unit 39, a temperature sensor 37, and a device parameter controller 38.

The ramp creating unit 39 creates a ramp voltage using a supply voltage received from an external device and supplies the ramp voltage to the electrodes $Y_1$ through $Y_n$. The ramp creating unit 39 includes devices in which the slopes of output waveforms change according to changes of device parameters. The temperature sensor 37 senses a panel temperature of the PDP. The device parameter controller 38 changes integer values of the devices according to the panel temperature and controls the slope of a ramp waveform.

According to an embodiment of the present invention, the ramp voltage has a ramp waveform with a variable slope. The ramp creating unit 39 includes devices, such as a capacitor C1 and a digital resistor DR1 configured as in FIG. 12, in which the slopes of output ramp waveforms can change according to changes in their characteristic values.

In particular, in the present embodiment, at least one parameter, that is, a characteristic value of the digital resistor DR1 or the capacitor C1 is controlled in real time according to temperature, so that the slope of the ramp waveform can cause an optimal discharge in the PDP according to a temperature change. The ramp creating circuit 39 according to the current embodiment of the present invention senses a panel temperature of the PDP through the temperature sensor 37.

The temperature sensor 37 should be disposed near the PDP in order to easily sense the panel temperature. For example, the temperature sensor 37 can be disposed at a chassis base near the panel. Alternatively, the temperature sensor 37 can be disposed near the device parameter controller 38 for control facilitation. For example, the temperature sensor 37 can be disposed at a control board such as a logic controller.

As such, if the temperature sensor 37 does not directly measure the temperature of the panel, the device parameter controller 38 can set the device parameter considering a temperature difference between a temperature at a measuring location and an actual temperature of the panel.

The device parameter controller 38 changes integer values of the devices according to the panel temperature to control a slope of a ramp waveform. In the current embodiment, a resistor controller for receiving the panel temperature sensed by the temperature sensor 37 and changing the resistance of the digital resistor DR1 is used as the device parameter controller 38.

The resistor controller 38 can change the resistance of the digital resistor DR1 to raise the slope of the ramp waveform if the temperature of the panel decreases, and can change the resistance of the digital resistor DR1 to lower the slope of the ramp waveform if the temperature of the panel increases.

In the current embodiment, adjustment of the resistance of the digital resistor DR1 is performed to correct a change in the capacitance C of the capacitor C1 according to temperature.

In order to perform the adjustment, a slope of a ramp waveform capable of generating an optimal discharge according to a temperature change of the panel is first obtained, and then a change in the slope of the ramp waveform according to a change in the resistance and capacitance in the ramp creating circuit 39 is obtained. Then, parameters of devices for generating a ramp waveform having an optimal slope according to a temperature can be obtained on the basis of the result.

When the temperature increases, the capacitance of the capacitor C1 increases or decreases according to the type of capacitor C1. Accordingly, the resistance of the digital resistor DR1 with respect to a temperature can be controlled considering such a change in the capacitance according to the characteristic of the capacitor C1.

That is, as in the current embodiment, by adjusting the resistance of the digital resistor DR1 considering a change in capacitance of the capacitor C1 according to temperature, it is possible to generate a ramp waveform having a slope capable of generating an optimal discharge in the panel by adjusting only the digital resistor DR1.

Also, in another embodiment, the resistor controller 38 of the ramp creating circuit 39 can vary the resistance of the digital resistor DR1 in such a manner that a panel temperature is classified into a low temperature area, a normal temperature area, and a high temperature area, a slope of a ramp waveform which can be supplied at the normal temperature area is set as a reference slope, a slope of the ramp waveform higher than the reference slope is supplied at the low temperature area, and a slope of the ramp waveform lower than the reference slope is supplied at the high temperature area.

The ramp creating circuit 39 can include a constant current creating unit 391, a gate driver 392, and a slope setting unit 393. The constant current creating unit 391 supplies a constant current to the panel in order to supply a ramp voltage to the panel. The gate driver 392 drives the constant current creating unit 391. The slope setting unit 393 is connected between the gate driver 392 and the constant current creating unit 391 and sets the slope of the ramp voltage.

The constant current creating unit 391 can be a Field Effect Transistor (FET) M1 having a drain D, a gate G, and a source S. The FET M1can be driven by a square wave signal received from the gate driver 392. The slope setting unit 393 can include a digital resistor DR1 capable of adjusting its resistance by the device parameter controller 38.

Also, the slope setting unit 393 can further include a capacitor C1 having a first terminal connected to the drain D and a second terminal connected to a first terminal of the digital resistor DR1 and the gate G. A second terminal of the digital resistor DR1 can be connected to a first terminal of the gate driver 392.

Also, the ramp creating circuit 39 can further include a zener diode D1 having an anode connected to the first terminal of the digital resistor DR1 and a cathode connected to a second terminal of the gate driver 392 and the source S.

Components performing the same functions as those of components of FIG. 2, among the components of the PDP driving apparatus of FIG. 2, are denoted by like reference numbers, and detailed descriptions thereof have been omitted.

Hereinafter, a method of creating a ramp waveform with a predetermined slope using the ramp creating circuit 39 according to an embodiment of the present invention is described with reference to FIGS. 11 and 12.

The ramp creating circuit 39 generates a ramp waveform and supplies the ramp waveform to X electrodes and Y electrodes during a reset period, wherein the ramp waveform indicates a linearly increasing or decreasing voltage waveform.

In order to create the ramp waveform, the ramp creating circuit 39 must include a switching device of a constant current source with respect to the panel which is modeled to a capacitor load Cp. Conventionally, a FET M1 having a drain D, a gate G, and a source S is used as the switching device of the constant current source. The gate G is connected to the gate driver 392, the drain D is connected to an input voltage source VD, and the source S is connected to the panel Cp.

In particular, the digital resistor DR1 and the capacitor C1 are connected between the drain D and the gate G, so that a slope of the ramp waveform required for driving the PDP is set.

In order to increase or decrease a voltage supplied to the panel with a ramp waveform having a constant slope, a change amount of the panel voltage with respect to a time must be expressed by a predetermined constant, as shown in Equation 1. That is, in order to obtain a ramp waveform having a constant slope, if the capacitance C is constant, a current iDS flowing to the panel through the source S of the FET M1 from the drain D of the FET M 1 must have a constant value.

$$\frac{dV_C}{dt} = \frac{1}{C}i_{DS},\qquad (1)$$

where, $V_C$ is the voltage supplied to the panel, and C is the capacitance of the panel. The slope of the ramp waveform can be determined by the digital resistor DR1 and the capacitor C1 connected between the drain D and the gate G.

A gate current ig flows via the digital resistor DR1 and the capacitor C1 according to a driving signal input to the gate terminal G of the FET M1 by the gate driver Vg. A relationship between the ramp waveform of the gate current ig and its slope can be expressed as Equation 2.

$$\frac{dV_{DS}}{dt} = \frac{dV_{DG}}{dt} = \frac{i_g}{C1}\qquad (2)$$

As seen in Equation 2, as the slope of a voltage $V_{DS}$ between the drain D and the source S of the FET M1 changes, the gate current ig changes, so that the slope of a ramp waveform voltage supplied to both ends of the panel changes. Also, if the capacitance of the capacitor C1 changes when the gate current $i_g$ is constant, the slope of the drain-source voltage $V_{DS}$ changes, so that the slope of the ramp waveform voltage supplied to the panel changes.

The voltage $V_C$ supplied to the panel is determined by a difference between the drain-source voltage $V_{DS}$ and the input voltage source $V_D$ supplied to the drain terminal D of the FET M1. Accordingly, by maintaining the input voltage $V_D$ supplied to the drain terminal D of the FET M1 constant, a change rate of the panel voltage $V_C$ according to time depends on a change rate of the drain-source voltage $V_{DS}$ according to time.

Also, the zener diode D1 conducts when an inverse voltage higher than a predetermined voltage is supplied. Accordingly, the zener diode D1 causes the voltage of the gate terminal G of the FET to be maintained at a constant voltage.

In the current embodiment, the constant current generating unit 391 includes the FET M1 whose drain D is connected to the input voltage source $V_D$, whose gate G is connected to the gate driver 392, and whose source S is connected to the panel Cp. According to an embodiment of the present invention, in order to supply a voltage with a ramp waveform having a predetermined slope to the panel Cp, the current $i_{DS}$ flowing through the source S from the drain D to the panel Cp must be a constant current according to Equation 1.

The slope of the ramp voltage is decided by the characteristic values of devices constituting the slope setting unit 393. Accordingly, in order to perform an appropriate discharge in a reset period, etc. requiring a ramp voltage, a required slope is first obtained, and the resistance and the capacitance of the digital resistor DR1 and the capacitor C1 of the slope setting unit 393 for deciding the slope of the ramp voltage are respectively set.

$$i_g = \frac{V_g - V_{th}}{R1}\qquad (3)$$

Setting the slope of the ramp voltage according to the resistance of the digital resistor DR1 can be performed using Equations 2 and 3. In Equation 3, $V_{th}$ is a threshold voltage of the FET M1 and is conventionally 3V through 5V. Also, Vg is a voltage supplied to the gate G of the FET 391 in order to drive the constant voltage generating unit 391 by the gate driver 392.

That is, since the gate current ig flowing through a parallel path of the digital resistor DR1 and capacitor C1 changes according to the resistance of the digital resistor DR1, the slope of the drain-source voltage $V_{DS}$ changes according to Equation 2, and, thus, the slope of the ramp voltage supplied to both ends of the panel is adjusted.

In a PDP driving apparatus according to an embodiment of the present invention, by differently adjusting the slopes of ramp pulse voltages supplied to respective electrodes according to a change in temperature, it is possible to stabilize a discharge.

While the present invention has been particularly shown and described with reference to exemplary embodiments thereof, it will be understood by those of ordinary skill in the art that various modifications in form and detail can be made therein without departing from the scope of the present invention as defined by the following claims.

**Claims**

1. A method of driving a Plasma Display Panel (PDP) having discharge cells arranged where sustain electrodes cross address electrodes, the method comprising:

processing an input image signal received from an external device and dividing the processed input image signal into frames, wherein each frame includes a plurality of subfields, each subfield having a corresponding gray scale weight; and
supplying a voltage with a pulse waveform, the pulse waveform having the form of a slope during a predetermined period in each subfield, determining a type of the input image signal; and adjusting the gradient of the slope according to a temperature of the PDP if the input image signal is a Phase Alternation Line (PAL) signal.

**2.** A method of driving a Plasma Display Panel (PDP) having discharge cells arranged where sustain electrodes cross address electrodes, the method comprising:

processing an input image signal received from an external device and dividing the processed input image signal into frames, wherein each frame includes a plurality of subfields, each subfield having a corresponding gray scale weight; and
supplying a voltage with a pulse waveform, the pulse waveform having the form of a slope during a predetermined period in each subfield;
determining a type of each frame; and
adjusting the gradient of the slope according to a temperature of the PDP if the frame is a second frame;
wherein each frame is one of a first frame having a subfield configuration having gray scale weights sequentially increasing by a substantially constant amount, and the second frame having two or more subfield groups each having gray scale weights sequentially increasing by a substantially constant amount.

**3.** A method according to claim 1 or 2, wherein adjusting the gradient of the slope comprises:

detecting the temperature of the PDP; and
adjusting the gradient of the slope according to the detected temperature of the PDP.

**4.** A method according to claim 1 or 2, wherein the gradient of the slope is adjusted to be inversely proportional to a temperature of the PDP.

**5.** A method according to claim 1 or 2, wherein the pulse waveform rises from a first level to a second level during the predetermined period.

**6.** A method according to claim 5, wherein the gradient of the slope decreases when the temperature of the PDP rises and the gradient of the slope increases when the temperature of the PDP falls.

**7.** A method according to claim 1 or 2, wherein the pulse waveform falls from a third level to a fourth level during the predetermined period.

**8.** A method according to claim 7, wherein the gradient of the slope decreases when the temperature of the PDP rises and the gradient of the slope increases when the temperature of the PDP falls.

**9.** A method according to claim 1 or 2, wherein the pulse waveform includes a rising pulse waveform, rising in a slope from a first level to a second level, and a falling pulse waveform, falling in a slope from a third level to a fourth level.

**10.** A method according to claim 9, wherein the gradient of the slope of at least one of the rising pulse waveform and the falling pulse waveform decreases when a temperature of the PDP rises, and the gradient of the slope of at least one of the rising pulse waveform and the falling pulse waveform increases when the temperature of the PDP falls.

**11.** A method according to claim 9, wherein each of the subfields comprises a reset period for initializing all of the discharge cells, an address period for selecting discharge cells, and a sustain-discharge period for performing a sustain discharge in the selected discharge cells.

**12.** A method according to claim 11, wherein the pulse waveform is supplied during the reset period.

**13.** A method according to claim 1 or 2, wherein the pulse waveform is a ramp pulse waveform, and wherein the gradient of a slope of the ramp pulse waveform is adjusted by controlling a device parameter of a ramp creating circuit for creating the ramp pulse waveform.

**14.** A method of driving a Plasma Display Panel (PDP) having discharge cells arranged where sustain electrodes cross address electrodes, the method comprising:

processing an input image signal received from an external device and dividing the processed input image signal into frames, wherein each frame includes a plurality of subfields, each subfield having a corresponding gray scale weight;
supplying a voltage with a pulse waveform, the pulse waveform having the form of a slope during a predetermined period in each subfield,
determining a type of the input image signal;
creating a configuration of subfields in each frame, according to the type of input image signal;
detecting a temperature of the PDP; and
adjusting the gradient of the slope according to the temperature of the PDP.

**15.** A method according to claim 14, wherein, in creating the configuration of the subfields in each frame:

a frame is a first frame having a subfield configuration having gray scale weights sequentially increasing with a constant slope upon the input image signal being a National Television System Committee (NTSC) signal; and

a frame is a second frame having two or more subfield groups having gray scale weights sequentially increasing with a constant slope upon the image signal being a Phase Alternation Line (PAL) signal.

16. A method according to claim 14, wherein detecting the temperature of the PDP is performed only upon the input image signal being a Phase Alternation Line (PAL) signal.

17. A method according to claim 14, wherein each of the subfields comprises a reset period for initializing all of the discharge cells, an address period for selecting discharge cells, and a sustain-discharge period for performing a sustain discharge in the selected discharge cells.

18. A method according to claim 17, wherein the pulse waveform is supplied during the reset period, and the pulse waveform comprises a rising pulse waveform and a falling pulse waveform.

19. A method according to claim 18, wherein the gradient of a slope of at least one of the rising pulse waveform and the falling pulse waveform of the pulse waveform decreases when the temperature of the PDP rises; and wherein the gradient of the slope of at least one of the rising pulse waveform and the falling pulse waveform increases when the temperature of the PDP falls.

20. A method according to claim 14, wherein the pulse waveform is a ramp pulse waveform, and wherein the gradient of a slope of the ramp pulse waveform is adjusted by controlling a device parameter of a ramp creating circuit for creating the ramp pulse waveform.

21. A method according to claim 20, wherein the gradient of the slope of the ramp pulse waveform is adjusted to be inversely proportional to the temperature of the PDP.

22. A plasma display panel driving apparatus for driving a Plasma Display Panel (PDP) having discharge cells arranged where sustain electrodes cross address electrodes, the plasma display panel driving apparatus comprising:

means for processing an input image signal received from an external device and dividing the processed input image signal into frames, wherein each frame includes a plurality of subfields, each subfield having a corresponding gray scale weight; and

means for supplying a voltage with a pulse waveform, the pulse waveform having the form of a slope during a predetermined period in each subfield,

means for determining a type of the input image signal; and

means for adjusting the gradient of the slope according to a temperature of the PDP if the input image signal is a Phase Alternation Line (PAL) signal.

# FIG. 1

# FIG. 2

EP 1 715 471 A2

# FIG. 3A

EP 1 715 471 A2

# FIG. 3B

EP 1 715 471 A2

# FIG. 4

RESTING PERIOD   <1> <2> <3> <4> <5> <6> <7> <8> <9> <10> <11>

SUB RESET

MAIN RESET

# FIG. 5

RESTING PERIOD   <1> <2> <3> <4> <5> <6><7> RESTING PERIOD <8> <9> <10> <11> <12>

SUB RESET      SUB RESET

MAIN RESET      MAIN RESET

# FIG. 6

# FIG. 7

# FIG. 8

# FIG. 9

START
↓
DETERMINE INPUT IMAGE SIGNAL TYPE — 101

NTSC →

PAL ↓

CONFIGURE SUBFIELDS — 102          CONFIGURE SUBFIELDS — 103

↓

DETECT TEMPERATURE — 104

↓

ADJUST SLOPE OF RAMP PULSE WAVEFORM — 105

↓

DRIVE PANEL — 106

↓

END

100

# FIG. 10

200

START

CONFIGURE FRAMES — 201

202
DETERMINE FRAME
CONFIGURATION TYPE

FIRST FRAME

SECOND FRAME

DETECT TEMPERATURE — 204

ADJUST SLOPE OF RAMP
PULSE WAVEFORM — 205

DRIVE PANEL — 206

END

FIG. 11

# FIG. 12

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6744218 B